# EUROPEAN PATENT SPECIFICATION

(11) **EP 2 806 188 B1**
(45) Date of publication and mention of the grant of the patent: **27.04.2016**
(21) Application number: 13305652.3
(22) Date of filing: 21.05.2013
(51) Int. Cl.: F16H 53/06

(54) **Cam follower roller assembly**
Nockenstößelrollenanordnung
Ensemble galet de contre-came

(43) Date of publication of application: 26.11.2014
(73) Proprietor: Aktiebolaget SKF, 415 50 Göteborg (SE)
(72) Inventor: Hauvespre, Benoît, 37390 Mettray (FR); Jouanno, Guillaume, 37540 Saint-Cyr-sur-Loire (FR)
(74) Representative: Kohl, Thomas

(56) References cited:
- WO-A1-2006/075774
- JP-A- 2005 030 569

## Description

This invention relates generally to a cam follower assembly for actuating a reciprocating movement used in automotive or industrial applications such as fuel injection pumps, ICE valve timing systems for internal combustion engines, valve train cam followers or rocker arm bearings.

### Background

Engine manufacturers strive to improve performance of internal combustion engines by maximizing the conversion of chemical energy to mechanical energy. The conversion efficiency may be improved when losses of energy used to overcome friction between moving parts in the engine are reduced. Mechanical design along with oil and other lubricants aid in reducing these losses.

With increasing demand on fuel efficiency, the pressures to be transferred by the cam followers, in particular cam followers for actuating high-pressure fuel pumps, have significantly increased. The load applied on the cam follower devices is increased proportionally.

Roller follower assemblies are mechanical design improvements that reduce friction losses between a cam and a rocker arm. Past systems used a sliding contact between the cam and rocker arm. These systems resulted in large frictional losses. Also, these systems experienced increased wear. Roller follower assemblies reduce friction between the cam and rocker arm by changing the sliding contact to a rolling contact. However, roller follower assemblies may still have a problem with wear.

Each roller rotates about an axle shaft. Typically, oil reduces sliding friction between a roller and the axle shaft, wherein the lubricating oil is usually provided with a constant flow rate while the engine is operating.

Several reasons including cost saving requirements makes it desirable to reduce the required oil flow rate to a minimum. In some applications, the assembly has to be operative even in transitory periods where the oil flow is interrupted or has not yet started, e.g. when the engine is started and the future trend might even go towards completely oil-free operation.

In order to provide a cam follower assembly meeting the above requirements, the document US 6 213 075 A1 discloses a cam follower assembly including a roller mounted on a pin, wherein the surface of the pin is coated with a diamond-like carbon (DLC) coating. However, it has turned out that the improvements obtained by using DLC coatings are not sufficient for meeting the requirements of the automobile industry.

Further, it has been proposed to combine a DLC coating on a first surface with a black oxide coating on a second surface, the first surface and the second surface being one of the radially outer surface of the pin or of a bushing and the radially inner surface of a bore in the roller or in the bushing respectively. However, it has turned out that the black oxide coating tends to peel off after a certain period of time.

Document JP2005 030 569 shows the preamble of claim 1.

### Summary of the Invention

The present invention seeks to provide a cam follower assembly meeting the above requirements. This object is achieved by a cam follower according to claim 1, wherein preferable embodiments of the invention are defined in the dependent claims.

The invention starts from a cam follower roller assembly comprising a body, a shaft mounted on the body, and a roller rotatably mounted on said shaft, wherein at least a radially outer surface of the shaft and/or at least a radially inner surface of a bore of the roller are coated with an antifriction and/or wear resistance coating.

It is proposed that said antifriction and/or wear resistance coating comprises tungsten (IV) sulfide (WS2). Tungsten (IV) sulfide (WS₂) is a solid lubricant which despite being in the solid phase, is able to reduce friction between two surfaces sliding against each other without the need for a large amount of liquid lubrication medium. Surprisingly, the dry lubrication is sufficient to ensure a reliable and non-damaging operation even in initial phases when no oil flow is provided. Moreover, the provision of tungsten (IV) sulfide (WS2) reduces the required minimum oil flow rate strongly even in continuous operation.

In a preferred embodiment of the invention, the dry lubricant is entirely formed by tungsten (IV) sulfide (WS₂) crystallites, which is sometimes referred to as tungsten disulfide.

Preferably, the antifriction and/or wear resistance coating is a layered structure of flat crystals, wherein spaces between the layers may be filled with lubricant. The high pressure/load acting on the assembly may press the lubricant out of the pores or spaces and thus improves the lubrication.

Experiments have shown that good results at reasonable manufacturing costs may be achieved when the tungsten (IV) sulfide (WS₂) crystals have a crystal diameter of 0.8-1.5µm and a thickness of 100nm or less. Preferably, the thickness of the antifriction and/or wear resistance coating is between 0.5 and 0.8 µm.

The best results in terms of lubrication can be achieved when both the radially outer surface of the shaft and the radially inner surface of a bore of the roller are coated with the antifriction and/or wear resistance coating.

Alternative embodiments of the invention relate to cam followers further comprising a bushing radially interposed between the roller and the shaft. In this case, two pairs of contact surfaces are formed, i.e. a first contact between the radially outer surface of the shaft and the radially inner surface of the bore of the bushing and a second contact between the radially outer surface of the bushing and a radially inner surface of a bore of the roller.

According to the invention at least a radially outer surface of the bushing in contact with the roller and/or the radially inner surface of a bore of the bushing in contact with the shaft are coated with the antifriction and/or wear resistance coating. In a preferred embodiment of the invention, each of the pairs of contact surfaces defined above includes at least one WS₂ coating.

In an embodiment of the invention which is particularly robust and has a long lifetime, one of the a radially outer surface of the shaft, the radially inner surface of a bore of the roller or one of the radially outer or inner surfaces of the bushing is coated with the coating comprising WS2, wherein the surface being in contact with the surface coated with the coating comprising WS2 is coated with a diamond like carbon (DLC) coating. It has turned out that the combination of a WS2 coating on one surface with a DLC surface on the other surface in contact with the one surface requires a low oil flow rate because the required thickness of the lubricating oil film is small and the friction coefficient is small.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

### Brief Description of the Figures

Fig. 1 is a cam follower roller assembly according to a first embodiment of the invention.
Fig. 2 is a cam follower roller assembly according to a second embodiment of the invention.
Fig. 3 is a cam follower roller assembly according to a third embodiment of the invention including a rocker arm.

### Detailed Description of the Embodiments

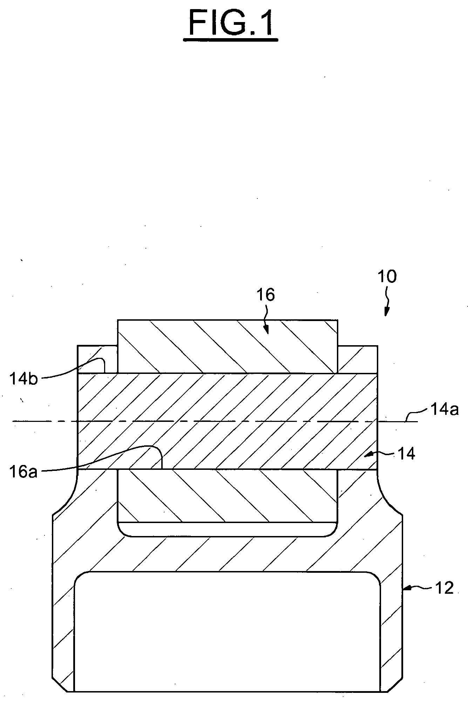

Fig. 1 shows a cam follower roller assembly 10 according to a first embodiment of the invention. The cam follower roller assembly 10 may be used e.g. for actuating a fuel injection pump of an internal combustion machine.

The cam follower roller assembly comprises a body 12, a shaft 14 mounted on the body 12, and a roller 16 rotatably mounted on a radially outer surface 14b of the shaft 14. A radially outer surface 14b of the shaft 14 and a radially inner surface 16a of a bore of the roller 16 are in contact with one another. A radially outer surface of the roller 16 is adapted to be pressed against a cam provided on an engine camshaft (not shown) with a rotation axis parallel to an axis 14a of the shaft 14 and a rotation axis of the roller 16. The body 12 has a roughly cylindrical form adapted to reciprocate in a guiding bore and is provided with a recess for receiving the roller 16.

The radially outer surface 14b of the shaft 14 is coated an antifriction coating. In alternative embodiments of the invention, the antifriction coating may be provided on the radially inner surface 16a of the bore of the roller 16 or on both the radially outer surface 14b of the shaft 14 and a radially inner surface 16a of a bore of the roller 16.

The bore of the roller 16 is fitted over the shaft 14 and the radially inner surface 16a of the bore, which is uncoated in this embodiment but which may be coated with an antifriction and/or wear resistance coating such as the coating on the shaft 14 or such as a DLC coating on other embodiments of the invention.

One of the key aspects of the invention is the proposal that the antifriction and/or wear resistance coating comprises tungsten (IV) sulfide (WS2). In the present embodiment of the invention, the dry lubricant is entirely formed by tungsten (IV) sulfide (WS₂), which is sometimes referred to as tungsten disulfide.

The WS₂ coating is a layered structure of flat tungsten (IV) sulfide crystals, wherein spaces between the layers are filled with lubricating oil during operation. The high pressure/load acting on the assembly may press the lubricant out of the pores or spaces and thus improves the lubrication. The WS₂ crystals have an average crystal diameter of 1µm and an average thickness of 100nm or less. The thickness of the antifriction and/or wear resistance coating is between 0.5 and 0.8 µm.

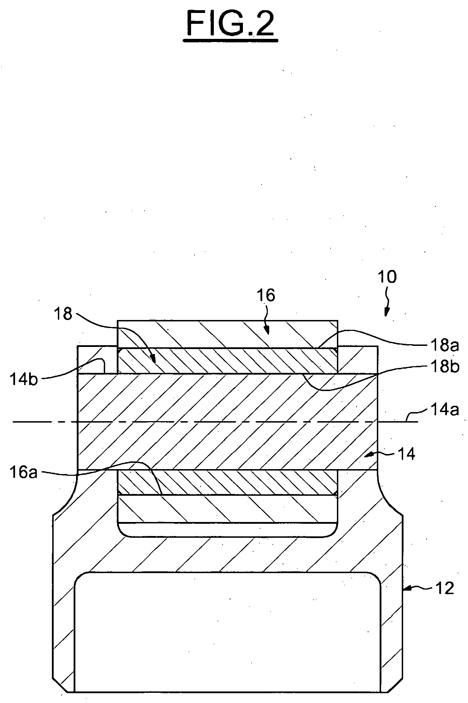

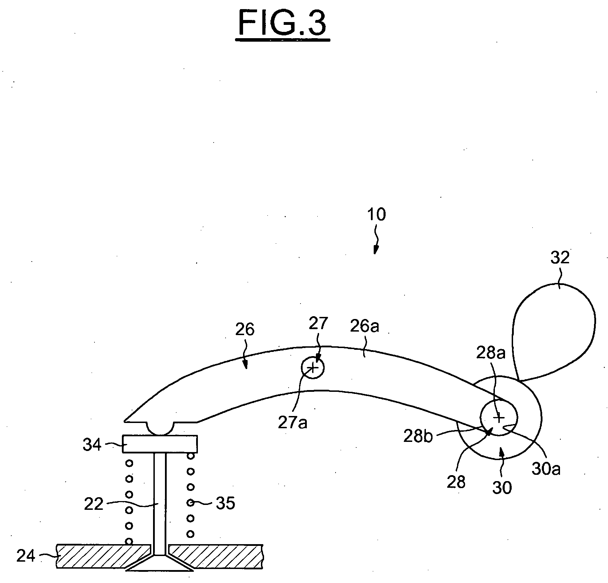

Fig. 2 and Fig. 3 are second and third embodiments of the invention. The following description focuses on differences to the embodiment illustrated in Fig. 1, wherein parts with similar or identical functions are designated using the same reference numbers in order to highlight the similarities. For unchanged features, the reader is referred to the embodiment of Fig. 1 above on order to avoid repetitions.

Fig. 2 shows a cam follower roller assembly according to a second embodiment of the invention, wherein the cam follower roller assembly further comprises a bushing 18 radially interposed between the roller 16 and the shaft 14 in a coaxially aligned arrangement.

An outer cylindrical surface 18a of the bushing 18 comes radially into contact with the radially inner surface 16b of the bore of the roller 16 and a radially inner surface 18b of the bore of the bushing 18 comes radially into contact with the radially outer surface 14b of the shaft 14.

In the embodiment illustrated in Fig. 2, a radially outer surface 18a of the bushing 18 in contact with the roller 16 is coated with the antifriction coating comprising the WS₂ crystallites. The radially inner surface 16a of the bore of the roller 16 is coated with a coated with a diamond like carbon coating (DLC).

In alternative embodiments of the invention comprising a busing, another one or plural ones of the a radially outer surface 14b of the shaft 14, the radially inner surface 16a of the bore of the roller 16 or one of the radially outer or inner surfaces 18a,18b of the bushing 18 may be coated with the coating comprising the WS₂ crystallites, wherein the surface being in contact with the surface coated with WS₂ is coated with a diamond like carbon (DLC) coating.

Fig. 3 is a cam follower roller assembly according to a third embodiment of the invention including a rocker arm, a pin 27 and a shaft 28 each extending along an axis and being mounted on the arm, and a roller 30 supported on the shaft 28 and adapted to press against a cam of the internal combustion engine camshaft so that rotation of the camshaft causes a periodic pivoting of the rocker arm in order to open and close a valve 22. The roller 30 is rotatably mounted on an outer cylindrical surface 28b of the shaft 28 and has a bore 30a of cylindrical shape which comes radially into direct contact with said outer surface.

The rocker arm 26 comprises two identical spaced walls 26a, which are assembled together to support therebetween the pin 27 and the shaft 28. One end of each wall 26a presses against a plate 34 provided on top of the control valve 22. A spring 35 is mounted between said plate and the combustion engine 24. The shaft 28 is mounted at the opposite end of each wall 26a. The rocker arm 26 may pivot around the axis 27a of the transversal pin 27, which is parallel to the axis 28a of the shaft 28. The shaft 28 and the roller 30 are identical to those described in the first embodiment and comprise coatings as previously disclosed. Similarly, a bushing 18 may be provided radially interposed between the roller 30 and the shaft 28 as disclosed in the second embodiment.

With the combination of a WS₂ coating and a DLC coating applied separately on the shaft 28 and the roller 30, and possibly on the bushing 18, and coming into contact with one another, the service life of the device is enhanced even under highly loaded conditions and conditions where lubrication is poor or absent.

## Claims

1. Cam follower roller assembly comprising a body (12), a shaft (14, 28) mounted on the body (12), and a roller (16, 30) rotatably mounted on said shaft (14, 28) or on a bushing (18) radially interposed between the roller (30) and the shaft (28), wherein one of a radially outer surface (14b) of the shaft (14), a radially inner surface (16a) of a bore of the roller (16, 30) or one of radially outer or inner surfaces of the bushing (18) is coated with an antifriction and/or wear resistance coating comprising tungsten (IV) sulfide (WS2),
**characterized in that** the surface being in contact with the surface coated with the coating comprising tungsten (IV) sulfide (WS2) is coated with a diamond like carbon (DLC) coating.

2. Cam follower roller assembly according to claim 1,
**characterized in that** the antifriction and/or wear resistance coating is formed by tungsten (IV) sulfide (WS₂) crystallites.

3. Cam follower roller assembly according to one of the preceding claims,
**characterized in that the** antifriction and/or wear resistance coating is a layered structure of flat crystals, wherein spaces between the layers are filled with lubricant.

4. Cam follower roller assembly according to claim 3,
**characterized in that** said crystals are tungsten (IV) sulfide (WS₂) crystals.

5. Cam follower roller assembly according to claim 4,
**characterized in that** the Tungsten (IV) sulfide (WS₂) crystals have a crystal diameter of 0.8-1.5µm and a thickness of 100nm or less.

6. Cam follower roller assembly according to one of the preceding claims,
**characterized in that** the thickness of the antifriction and/or wear resistance coating is between 0.5 and 0.8 µm.

## Patentansprüche

1. Nockenstößelrollenanordnung, umfassend einen Körper (12), eine Welle (14, 28), die an dem Körper (12) angebracht ist, und einer Rolle (16, 30), die drehbar an der Welle (14, 28) oder auf einer Buchse (18) angebracht ist, die radial zwischen der Rolle (30) und der Welle (28) angeordnet ist, wobei entweder eine radial äußere Oberfläche (14b) der Welle (14), eine radial innere Oberfläche (16a) einer Bohrung der Rolle (16, 30) oder eine radiale äußere oder innere Oberfläche der Buchse (18) mit einer reibungsverringernden und/oder verschleißbeständigen Beschichtung beschichtet ist, die Wolfram(IV)sulfid (WS₂) umfasst,
**dadurch gekennzeichnet, dass** die Oberfläche, die mit der Oberfläche in Kontakt ist, die mit der Beschichtung beschichtet ist, die Wolfram(IV)sulfid (WS₂) umfasst, mit einer diamantartigen Kohlenstoffbeschichtung (DLC-Beschichtung) beschichtet ist.

2. Nockenstößelrollenanordnung nach Anspruch 1,
**dadurch gekennzeichnet, dass** die reibungsverringernde oder verschleißbeständige Beschichtung durch Wolfram(IV)sulfid (WS₂)-Kristallite gebildet wird.

3. Nockenstößelrollenanordnung nach einem der vorhergehenden Ansprüche,
**dadurch gekennzeichnet, dass** die reibungsverringernde oder verschleißbeständige Beschichtung eine Schichtstruktur aus Flachkristallen ist, wobei Zwischenräume zwischen den Schichten mit Schmiermittel gefüllt sind.

4. Nockenstößelrollenanordnung nach Anspruch 3,
**dadurch gekennzeichnet, dass** die Kristalle Wolfram(IV)sulfid (WS₂)-Kristalle sind.

5. Nockenstößelrollenanordnung nach Anspruch 4,
**dadurch gekennzeichnet, dass** die Wolfram(IV)sulfid (WS₂)-Kristalle einen Kristalldurchmesser von 0,8-1,5 µm und eine Dicke von 100 nm oder weniger aufweisen.

6. Nockenstößelrollenanordnung nach einem der vorhergehenden Ansprüche,
**dadurch gekennzeichnet, dass** die Dicke der reibungsverringernden oder verschleißbeständigen Beschichtung zwischen 0,5 und 0,8 µm beträgt.

## Revendications

1. Dispositif de rouleau suiveur de came comprenant un corps (12), un arbre (14, 28) monté sur le corps (12), et un rouleau (16, 30) monté mobile à rotation sur ledit arbre (14, 28) ou sur une bague (18) intercalée radialement entre le rouleau (30) et l'arbre (28), dans lequel une surface radialement extérieure (14b) de l'arbre (14), une surface radialement intérieure (16a) d'un alésage du rouleau (16, 30) ou une des surfaces radialement extérieure ou intérieure de la bague (18) est recouverte d'un revêtement antifriction et/ou de résistance à l'usure comprenant du sulfure de tungstène (IV) (WS₂).
**caractérisé en ce que** la surface en contact avec la surface recouverte par le revêtement comprenant du sulfure de tungstène (IV) (WS₂) est recouverte d'un revêtement de carbone de type diamant (DLC).

2. Dispositif de rouleau suiveur de came selon la revendication 1,
**caractérisé en ce que** le revêtement antifriction et/ou de résistance à l'usure est constitué de cristallites de sulfure de tungstène (IV) (WS₂).

3. Dispositif de rouleau suiveur de came selon une des revendications précédentes,
**caractérisé en ce que** le revêtement antifriction et/ou de résistance à l'usure est une structure stratifiée de cristaux plats, dans laquelle les espaces entre les couches sont remplis avec un lubrifiant.

4. Dispositif de rouleau suiveur de came selon la revendication 3,
**caractérisé en ce que** lesdits cristaux sont des cristaux de sulfure de tungstène (IV) (WS₂).

5. Dispositif de rouleau suiveur de came selon la revendication 4,
**caractérisé en ce que** les cristaux de sulfure de tungstène (IV) (WS₂) ont un diamètre cristallin de 0,8-1,5 µm et une épaisseur de 100 nm ou moins.

6. Dispositif de rouleau suiveur de came selon une des revendications précédentes,
**caractérisé en ce que** l'épaisseur du revêtement antifriction et/ou de résistance à l'usure se situe entre 0,5 et 0,8 µm.
